(19) **Europäisches Patentamt**

**European Patent Office**

**Office européen des brevets**

(11) **EP 0 598 318 B1**

(12) **EUROPÄISCHE PATENTSCHRIFT**

(45) Veröffentlichungstag und Bekanntmachung des Hinweises auf die Patenterteilung:
**28.07.1999 Patentblatt 1999/30**

(51) Int. Cl.$^6$: **B01J 2/20**, C09C 1/58

(21) Anmeldenummer: **93118198.6**

(22) Anmeldetag: **10.11.1993**

(54) **Verfahren zur Herstellung kugelförmiger Granulate aus pulverförmigen Feststoffen**

Process for preparing spherical granulates from powdery solids

Procédé pour la préparation de granules sphériques à partir d'un solide pulvérulent

(84) Benannte Vertragsstaaten:
**AT BE CH DE DK ES FR GB GR IE IT LI LU MC NL PT SE**

(30) Priorität: **14.11.1992 DE 4238495**
**27.10.1993 DE 4336548**

(43) Veröffentlichungstag der Anmeldung:
**25.05.1994 Patentblatt 1994/21**

(60) Teilanmeldung:
**97113431.7 / 0 807 669**

(73) Patentinhaber:
**Degussa-Hüls Aktiengesellschaft**
**45764 Marl (DE)**

(72) Erfinder:
• **Klasen, Claas-Jürgen, Dr.**
**D-63517 Rodenbach (DE)**
• **Foerster, Martin, Dr.**
**D-63654 Büdingen (DE)**
• **Höfler, Andreas, Dr.**
**D-63755 Alzenau (DE)**
• **Bauer, Klaus-Peter**
**D-63477 Dörnigheim (DE)**
• **Riemenschneider, Herbert, Dr.**
**D-63571 Gelnhausen (DE)**
• **Franta, Oliver**
**D-60388 Frankfurt (DE)**
• **Gilg, Rainer**
**D-63584 Gründau 2 (DE)**

(56) Entgegenhaltungen:
EP-A- 0 360 236          EP-A- 0 370 490
DE-B- 1 224 859          US-A- 4 446 086

Bemerkungen:
Teilanmeldung 97113431.7 eingereicht am 04/08/97.

**Beschreibung**

Die Erfindung betrifft ein Verfahren zur Herstellung kugelförmiger Granulate aus pulverförmigen Feststoffen.

In vielen Industriezweigen besteht das Problem, pulverförmige Feststoffe zu lagern, zu transportieren und zu verarbeiten. Dies ist oft mit einem hohen Aufwand verbunden, denn die pulverförmigen Stoffe weisen physikalische Eigenschaften auf, die vom reinen Feststoffverhalten abweichen. Die technische Handhabbarkeit solcher Stoffe wird verbessert, wenn sie in granulierter Form vorliegen. Hierzu werden die Pulver gewöhnlich Unter Zusatz von geeigneten Bindemitteln mechanisch so weit verdichtet, daß Wechselwirkungskräfte Zwischen den einzelnen Pulverpartikeln in molekularen Bereichen an den Oberflächen wirksam werden. Es bilden sich dabei Produkte mit neuen Eigenschaften.

Von besonderem Interesse sind kugelförmige Granulate. Sie weisen gegenüber feindispersen Schüttgütern und zylinderförmigen Extrudaten oder Tabletten verbesserte Fließeigenschaften auf. Dadurch können sie kostengünstiger dosiert, transportiert und gelagert werden. In vielen Fällen müssen die granulierten Feststoffe bei der Anwendung wieder dispergiert werden, so zum Beispiel bei Waschmitteln und bei Verwendung von Ruß als struktureller Verstärker in Gummiartikeln (Gummiruße) oder zur Einfärbung von Lacken und Kunststoffen (Pigmentruße).

Die bei der Herstellung pulverförmig anfallenden Ruße müssen daher in einem nachfolgenden Verfahrensschritt granuliert werden. Hierbei ist neben einem geringen Feinanteil und einer möglichst engen Korngrößenverteilung auch eine einfache und vollständige Re-Dispergierbarkeit trotz möglichst hoher Festigkeit (Transportstabilität) der Granalien erwünscht.

Die Re-Dispergierbarkeit spielt beispielsweise bei Anwendungen auf den Gebieten der Lackherstellung, Kabelcompounds und technischen Gummiartikeln eine entscheidende Rolle, da selbst geringe Anteile nicht dispergierter Ruß-Agglomerate zu gravierenden anwendungstechnischen Mängeln des Endproduktes führen können.

Unter Ruß-Agglomeraten werden hier entsprechend den Definitionen in der Norm DIN 53206 durch physikalische Kohäsionskräfte (Van der Waals-Kräfte) gebundene Agglomerate aus einer Vielzahl sogenannter Ruß-Aggregate verstanden. Ruß-Aggregate entstehen durch feste Verwachsung der Ruß-Primärteilchen noch während des Ruß-Bildungsprozesses miteinander, aus denen sich durch spontane, oder durch einen Granulationsvorgang geförderte, Zusammenlagerung Ruß-Agglomerate bilden.

Bei Rußen mit hohem Hohlvolumenanteil der Aggregate spricht man von "hoher Struktur", bei geringem Hohlvolumenanteil von "niedriger Struktur". Als Maß für die Struktur eines Rußes dient die Dibutylphthalat-Absorption nach DIN 53601 (DBP-Absorption)

Die Rußstruktur bestimmt maßgeblich die Produkteigenschaften der damit eingefärbten bzw. verstärkten Lacke, Kunststoffe oder Gummiartikel. Um die Produkteigenschaften nicht zu beeinträchtigen, wird daher ein möglichst geringer Abbau der Struktur durch den Granulationsvorgang gefordert.

Granulierte, pulverförmige Feststoffe werden weiterhin als Träger für Chemiekatalysatoren und als Adsorbentien eingesetzt. In diesem Fall muß durch das Material selber oder durch Zusatz geeigneter Bindemittel gewährleistet sein, daß sich die Granalien im Gebrauch nicht auflösen. Gute Fließ- und Dosiereigenschaften sowie ein geringer Abrieb sind aber auch hier gefragt.

Verschiedene Verfahren zur Granulation bzw. Agglomeration pulverförmiger Feststoffe sind zum Beispiel aus Ullmann's Encyclopedia of Industrial Chemistry, Vol. B2, Seiten 7 - 15 bis 7 - 21 bekannt. Man unterscheidet Sprühagglomeration bzw. Sprühtrocknung, Aufbauagglomeration und Agglomeration durch mechanische Kompaktierung (Preßagglomeraten). Die hierbei entstehenden Agglomerate mit Abmessungen im Bereich von einigen Zehntel Millimetern bis zu einigen Millimetern werden für die Zwecke dieser Patentanmeldung als Granulate bezeichnet, um eine deutliche Unterscheidung zu den gemäß DIN 53206 definierten Ruß-Agglomeraten zu schaffen, die durch die spontane Zusammenlagerung von Rußaggregaten entstehen und Abmessungen unterhalb von 100 μm haben.

Die Granulation pulverförmiger Feststoffe wird gewöhnlich unter Zugabe eines geeigneten Bindemittels und eines Befeuchtungsmittels, in der Regel Wasser, durchgeführt. Das Befeuchtungsmittel muß nach der Granulation mit energieaufwendigen Trocknungsverfahren bis auf eine gewisse Restfeuchte entfernt werden. Je nach Einsatzgebiet schließt sich noch eine Kalzination der Granulate bei erhöhten Temperaturen an.

Die DE-AS 1 224 859 beschreibt zum Beispiel ein Verfahren zum Herstellen von Perlruß durch Naßperlen unter Zusatz eines Bindemittels, wobei der Ruß während des Perlens mit Wasser behandelt wird, das Pentaerythrit und/oder Dipentaerythrit als Bindemittel enthält.

Typische Einsatzgebiete dieser Agglomerationsverfahren sind die Sprühtrocknung von Waschmittelcompounds und Futtermitteln und die Aufbeuagglomeration von Ruß in Stachelwellenmischern, Pflugschar- oder Gegenstrommischern. Die damit erzeugten Agglomerate bzw. Granulate sind ungleichmäßig verdichtet.

Durch die relativ breite Korngrößenverteilung werden die Fließeigenschaften der Granulatsschüttung beeinträchtigt. Damit wird eine genaue Dosierung im Anwendungsfall erschwert. Die Zugabe von Befeuchtungsmitteln und Bindemitteln kann sich negativ auf die Redispergierbarkeit der Granalien auswirken.

Bei Agglomerationsverfahren mit mechanischer Verdichtung werden Malzenkompaktoren, Matrizenpressen und Extruder eingesetzt. Die von diesen Maschinen erzeugten Granulate bzw. Agglomerate haben Zylinderform und müssen zur Ausbildung der Kugelform in Rundungsaggregaten gerundet werden. Dabei zeigt sich, daß sehr unterschiedliche Granulatqualitäten erhalten werden. Die Durchmesserverteilung der Granulate weist im allgemeinen ein sehr breites Spektrum auf und enthält neben den gewünschten kugelförmigen Granalien feinteilige Bruchstücke, die in einem weiteren Verfahrensschritt abgesiebt werden aüssen, um ein staubfreies Produkt zu erhalten. Die physikalischen Eigenschaften dieser Granalien wie Homogenität, Bruchfestigkeit, Abrieb und Redispergierbarkeit weisen große Schwankungen auf und können mit den bekannten Verfahren nur unzureichend aufeinander abgestimmt werden.

Die EP 0 370 490 A1 beschreibt die Herstellung von leicht dispergierbarem Ruß durch Preßagglomeration mit einem Zweiwalzenkompaktor. Der kompaktierte Ruß wird bevorzugt in Form vom Rußflocken mit einer Stampfdichte von 0,1 bis 0,5 g/m$^3$, einer anfänglichen Dispersion von höchstens 5 % und einer Härte von höchstens 1,0 g erhalten.

Walzenkompaktoren und Ringmatrizenpressen zeichnen sich gegenüber Extrudern durch wesentlich geringere Investitionskosten aus.

Ringmatrizenpressen bestehen aus einer motorisch angetriebenen zylindrischen Hohlwalze (Matrize) mit radial angeordneten Preßkanälen. Auf der Innenfläche der Ringmatrize läuft eine Preßwalze (Koller) ab, deren äußerer Durchmesser kleiner ist als der innere Durchmesser der Ringmatrize.

Die Preßwalze ist exzentrisch zur Mittelachse der Ringmatrize angeordnet. Der Achsenabstand zwischen Preßwalze und Ringmatrizenpresse kann zur Einstellung des Walzenspaltes W zwischen Matrize und Preßwalze verändert werden. Ringmatrize und Preßwalze drehen sich gleichsinnig und ziehen dadurch das zugeführte Schüttgut in den Walzenspalt ein, verdichten es und pressen es durch die radialen Preßkanäle aus.

Die sich dabei ergebende Verdichtung wird von dem Druck bestimmt, der notwendig ist, die einzelnen Agglomeratstränge aus der Matrize auszuschieben. Dieser kann durch die Geometrie der Preßkanäle, bei vorgegebenem Durchmesser über die Länge, gesteuert werden.

Die Preßwalze kann separat angetrieben sein. Dadurch ist es möglich, einen Schlupf S zwischen Matrize und Preßwalze einzustellen. Der Schlupf S ist definiert durch die positive Differenz der Umfanggeschwindigkeiten von Matrize und Preßwalze geteilt durch die jeweils höhere Umfangsgeschwindigkeit

$$S = (V_1 - V_2)/V_1 \text{ mit } V_1 \geq V_2.$$

Der so definierte Schlupf variiert zwischen Null und Eins. Durch einen von Null verschiedenen Schlupf wird das in den Walzenspalt eingezogene Material im Walzenspalt einem höheren Preßdruck unterworfen und zusätzlich geschert. Dadurch erhält man eine verbesserte Verdichtung und einen homogeneren Aufbau der Agglomerate.

Mit jeder Umdrehung der Matrize werden scheibenförmige Teilagglomerate in die Bohrungen der Matrize eingewalzt. Diese verbinden sich zu einem endlosen Strang. Die Festigkeit in der Nahtstelle zweier Teilagglomerate ist geringer als im Innern eines Teilagglomerates (siehe Claas-Jürgen Klasen: "Die Agglomeration partikelförmiger Feststoffe in Matrizenpressen"; Fortschritt-Berichte VDI, Reihe 3: Verfahrenstechnik, Nr. 220; VDI-Verlag Düsseldorf 1990).

Durch geeignete Abstreifermesser können die aus der Matrize austretenden Agglomeratstränge abgeschnitten werden. Die geschnittenen oder ungeschnittenen zylinderförmigen Agglomerate können anschließend in einem Rundungsaggregat zu Granulaten gerundet werden. Ein Produktwechsel ist im allgemeinen mit nur geringem Aufwand verbunden, da die klare Trennung von Formgebung des Einsatzmaterials und Antrieb der Ringmatrizenpresse eine schnelle und gründliche Reinigung erlaubt.

Extruder erzeugen sehr homogene und hochverdichtete Agglomeratstränge. Extruder erfordern aber eine sehr genaue Einstellung der Feuchte und der Knetzeit des pulverförmigen Feststoffes. Typisch sind zulässige Toleranzen für die Feuchte des Einsatzmaterials von nur 1 bis 2 %. Die Investitionskosten für Extruder sind hoch.

Wie erwähnt, kommt es in vielen technischen Anwendungsfällen darauf an, Granulate mit möglichst guter Bruchfestigkeit und geringem Abrieb bei gleichzeitig guter Redispergierbarkeit zu erzeugen.

Diese Forderungen sind einander widersprechend und können mit den bekannten Agglomerations- bzw. Granulationsverfahren nicht immer vollständig erfüllt werden.

Daher ist es Aufgabe der vorliegenden Erfindung, ein einfaches und kostengünstiges Verfahren anzugeben, mit dem kugelförmige Granulate homogener Dichte erzeugt werden können, die ein sehr enges Durchmesserspektrum aufweisen und bezüglich Bruchfestigkeit, Abrieb und Redispergierbarkeit optimiert sind.

Erfindungsgemäß wird diese Aufgabe durch ein Verfahren zur Herstellung kugelförmiger Granulate aus pulverförmigen Feststoffen gelöst, wobei die Feststoffe unter Zugabe eines Befeuchtungsmittels, und gegebenenfalls eines Bindemittels sowie weiterer Additive, in einem Mischer unter Vermischen gleichmäßig durchfeuchtete, und anschließend die durchfeuchtete Mischung mit einer Ringmatrizenpresse, die einen variablen Schlupf zwischen Ringmatrize und Preßwalze aufweist, zu zylinderförmigen Strängen verpreßt, und danach die Stränge in einem Rundungsaggregat mit Riffelscheibe zu kugelförmigen Granulaten gerundet werden.

Das Verfahren ist dadurch gekennzeichnet, daß man eine Ringmatrizenpresse einsetzt, die Preßkanäle mit einem Langen- zu Durchmesserverhältnis von 1 : 1 bis 10 : 1 und einen Walzenspalt zwischen Ringmatrize und Preßwalze von 0,05 bis 2 mm aufweist.

Es wurde gefunden, daß bei geeigneter Aufbereitung der pulverförmigen Feststoffe durch Anfeuchten und Mischen mit einem Mischer sowie nachfolgendem Verpressen in einer geeignet dimensionierten Ringmatrizenpresse und Verrunden mit einem Rundungsaggregat mit Riffelscheibe kugelförmige Granulate erzeugt werden können, die eine sehr enge Verteilungskurve der Korndurchmesser (Korngrößenverteilung) aufweisen.

Der mittlere Korndurchmesser der Granalien wird wesentlich durch den Durchmesser der Preßkanäle der Matrize festgelegt und kann daher leicht durch Austausch der Matrize geändert werden.

Die Korngrößenverteilung der fertigen Granulate kann mit Hilfe einer Siebanalyse ermittelt werden. Die Siebanalyse liefert eine Summenverteilungskurve für die Korndurchmesser, aus der der mittlere Korndurchmesser abgelesen werden kann. Er ist definiert als derjenige Durchmesserwert, bei dem die Summenverteilungskurve den Wert 50 % annimmt, d. h. 50 Gew.-% der Granalien weisen einen Durchmesser auf, der kleiner als der mittlere Durchmesser ist.

Die Breite der sich ergebenden Korngrößenverteilung hängt unter anderem von der Art des zu granulierenden Feststoffes ab. Im allgemeinen zeigen mineralische Feststoffe eine engere Korngrößenverteilung als z. B. Ruß. Im Falle von Ruß liegen aber immer noch 80 Gew.-% der Granalien in einem Durchmesserintervall, dessen Breite weniger als 60 % des mittleren Korndurchmessers beträgt. Bei mineralischen Einsatzstoffen kann dieser Wert unter 30 % des mittleren Korndurchmessers absinken. Die Korngrößen-Verteilungskurven sind nicht notwendigerweise symmetrisch zum mittleren Korndurchmesser, sondern können mehr oder weniger große Asymmetrien aufweisen.

Die aus der Ringmatrizenpresse austretenden Agglomeratstränge brauchen nicht mit Hilfe eines Abstreifermessers abgelängt werden. Vielmehr dienen die Nahtstellen zwischen den Teilagglomeraten als Sollbruchstellen, die zu einem Zerbrechen der Agglomeratstränge im Rundungsaggregat in immer gleich große Teilagglomerate führen. Voraussetzung dafür ist allerdings, daß Feuchtegehalt des Einsatzmaterials und die Dimensionierung der Ringmatrizenpresse erfindungsgemäß gewählt werden.

Unter dem Feuchtegehalt wird im Rahmen dieser Erfindung der Gewichtsanteil des Befeuchtungsmittels, bezogen auf das Gesamtgewicht des angefeuchteten Einsatzmaterials, verstanden. Der optimale Feuchtegehalt für das erfindungsgemäße Granulationsverfahren liegt um bis zu 20 % unter dem optimalen Feuchtegehalt von herkömmlichen Granulationsverfahren. Dies kann im Einzelfall erhebliche Energieeinsparungen beim Trocknen des Granulats mit sich bringen.

Der optimale Feuchtegehalt hängt von der Art des Feststoffes ab, der granuliert werden soll, insbesondere von seinem Porenvolumen oder - im Falle von Ruß - von seiner Struktur. Er kann mit wenigen Vorversuchen ermittelt werden. Die hierfür notwendigen Techniken sind dem Fachmann bekannt.

Neben den Befeuchtungs- und Bindemitteln können den pulverförmigen Feststoffen vor dem Granulationsvorgang noch weitere Additive bis zu einem Gewichtsanteil von etwa 20 % am Gesamtgewicht der Mischung zugefügt werden. Bei diesen Additiven kann es sich zum Beispiel um Hydrophobierungsmittel handeln.

Das erfindungsgemäße Verfahren läßt sich besonders vorteilhaft für die Herstellung von kugelförmigen Granulaten mit Durchmessern von 0,5 bis 4 mm einsetzen. Die Liste der Feststoffe, die sich nach dem Verfahren verarbeiten lassen, umfaßt oxidische Materialien (Kieselsäuren, Zeolithe, $TiO_2$), keramische Farben, Pigmente, Zyanide wie auch Waschmittelcompounds, Futtermittel und Ruße.

Wegen der hohen Sphärizität weisen die nach dem erfindungsgemäßen Verfahren erzeugten Granalien im allgemeinen und ein gutes Fließverhalten auf. Da eine Granalie jeweils nur aus einem Teilagglomerat gebildet wird, sind die Granalien in sich homogen.

Überdies sind die Preßdrücke über die gesamte Walzenbreite der Ringmatrizenpresse sehr gleichmäßig, was zu entsprechend gleichmäßig verdichteten Agglomeratsträngen führt.

Dies hat eine konstante Dichte aller Granalien zur Folge. Ihre Redispergierbarkeit ist im allgemeinen sehr gut. Bei verklebenden Materialien kann im Rundungsaggregat eine einfache Vorrichtung zum Abpudern der Granalien vorgesehen werden.

Obwohl das erfindungsgemäße Granulationsverfahren auf viele pulverförmige Feststoffe anwendbar ist, liegt sein bevorzugtes Einsatzgebiet auf dem Gebiet der Granulation von Rußen verschiedener Qualitäten. Das Verfahren läßt sich gleichermaßen gut für die Granulation von Gummirußen als auch Pigmentrußen anwenden. Gummiruße weisen im allgemeinen eine DBP-Absorption zwischen 60 und 140 ml/100 g (Meßvorschrift nach DIN 53601), eine Jodadsorption unter 150 mg/g (Meßvorschrift nach DIN 53582) und eine Stampfdichte zwischen 400 und 550 g/l (Meßvorschrift nach DIN 150 787/11) auf, während Pigmentruße durch eine DBP-Absorption zwischen 40 und 450 ml/100 g, eine Jodadsorption zwischen 30 und 1200 mg/g und eine Stampfdichte zwischen 150 und 500 g/l charakterisiert sind.

Die Gruppe der Pigmentruße umfaßt auch die sogenannten Leitfähigkeitsruße, die sich durch besonders hohe Struktur und Oberfläche auszeichnen, was in den außergewöhnlich hohen Werten für DBP-Absorption und Jodadsorption zum Ausdruck kommt.

So weist zum Beispiel der Spezialleitfähigkeitsruß Printex XE2 (Markenname der Degussa) eine DBP-Absorption von 380 ml/100 g und eine Jodadsorption von 1075 ml/g auf.

Diese Leitfähigkeitsruße waren bisher einer Granulation nur schwer zugänglich und kommen daher überwiegend in Pulverform in den Handel. Es hat sich nun gezeigt, daß das erfindungsgemäße Granulationsverfahren in der Lage ist, auch diese Ruße zu granulieren.

Vorteilhaft gegenüber bekannten Naß-Granulationsverfahren für Ruße ist die Tatsache, daß nur sehr wenig Bindemittel den Rußen zugesetzt werden muß. Während konventionelle Granulationsverfahren einen Bindemittelgehalt der fertigen Granulate von 0,5 bis 3 Gew.-% erfordern, kommt das erfindungsgemäße Verfahren mit Bindemittelgehalten unter 1, bevorzugt unter 0,5 Gew.-% aus. Als Bindemittel kommen beispielsweise Melasse oder Ligninsulfat zum Einsatz, die auch bei den konventionellen Granulationsverfahren verwendet werden. Für Anwendungsfälle, in denen die Bindemittel störend wirken, kann auch völlig bindemittelfrei granuliert werden.

Die Einzelperlhärte der Granalien nach DIN 53603 liegt auch bei Abwesenheit von Bindemitteln im Bereich zwischen 10 und 50 cN und der nach DIN 53583 ermittelte Abrieb beträgt weniger als 3 Gew.-%.

Bei Granulation von Gummirußen wie zum Beispiel N326, N539, N550, N660 und N683 (Bezeichnungen nach ASTM) liegen die erzielbaren Stampfdichten zwischen 400 und 550 g/l, insbesondere zwischen 400 und 500 g/l. Die Dispergierhärte dieser Ruße, bestimmt nach DIN 53775, Teil 7, beträgt weniger als 5 %. Die so granulierten Ruße lassen sich somit hervorragend redispergieren.

Ein besonderer Vorteil des Granulationsverfahrens besteht darin, daß der Granulationsvorgang äußerst schonend abläuft. Struktur und spezifische Oberfläche der Pulverruße, gemessen durch ihre DBP-Absorption und Jod-Adsorption werden durch die Granulation nur um höchstens 5 % abgebaut. Diese Eigenschaft ist besonders bei Rußen mit hoher Struktur vorteilhaft.

In den folgenden Beispielen für das erfindungsgemäße Granulationsverfahren wurde eine Ringmatrizenpresse mit Preßkanaldurchmessern von 1 mm und einem l/d Längen- zu Durchmesserverhältnis von 5 sowie einem Walzenspalt von 0,2 mm eingesetzt. Der Schlupf war in allen Fällen gleich Null.

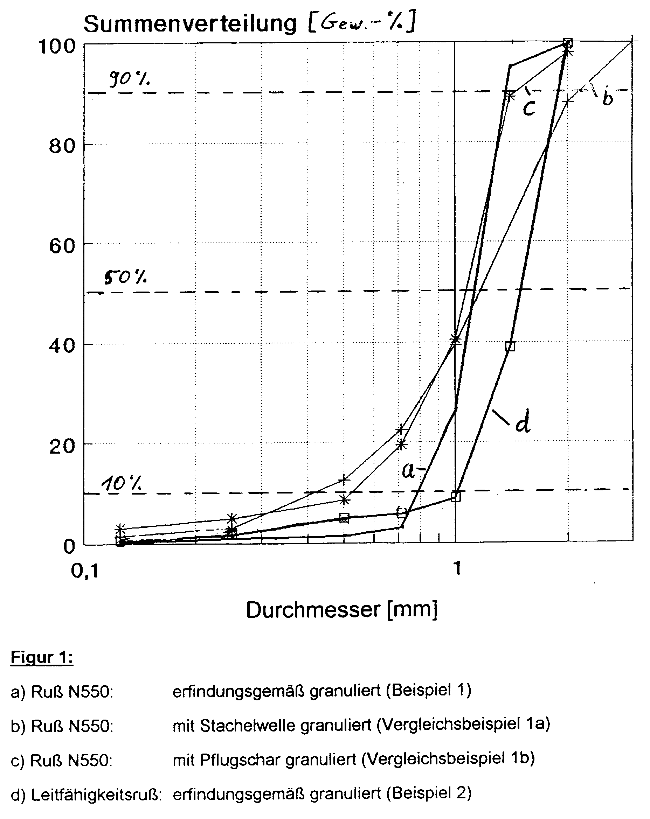

Figur 1 zeigt die aus Siebanalysen gewonnenen Summenverteilungskurven von drei Granulaten eines Gummirußes N550 (nach ASTM) sowie die Verteilungskurve eines granulierten Leitfähigkeitsrußes (Printex XE2, Degussa). Kurve a ist die Verteilungskurve eines gemäß der Erfindung gewonnenen Granulats. Die Granulate zu den Verteilungskurven b und c wurden durch konventionelle Aufbauagglomeration mit einem Stachelwellenmischer (Kurve b) bzw. einem Pflugscharmischer (Kurve c) hergestellt. Kurve d ist die Verteilungskurve für den erfindungsgemäß granulierten Leitfähigkeitsruß.

Beispiel 1: Granulierung von Gummirußen N 550 und N 660

Ruße werden in vielen technischen Gummiartikeln als strukturelle Verstärker eingesetzt. Für eine leichte Handhabbarkeit und Verarbeitbarkeit ist es einerseits notwendig, die Ruße für den Transport und die Einarbeitung z. B. in Kautschuk zu möglichst abriebfesten und harten Agglomeraten zu verformen, die sich jedoch andererseits sehr leicht dispergieren lassen sollen. Die die Verarbeitbarkeit der Ruße betreffenden Spezifikationswerte haben typischerweise folgende Werte:

| | |
|---|---|
| Mittlerer Korndurchmesser: | 0,5 bis 2 mm |
| Korngrößenverteilung: | möglichst geringe Bandbreite |
| Dispergierhärte: | < 10 % (nach DIN 53775, Teil 7) |
| Abrieb: | < 5 % (nach DIN 53583) |

Wie das folgende Beispiel zeigt, ist das erfindungsgemäße Verfahren in hervorragender Weise geeignet, Ruß-Granulate mit Eigenschaften herzustellen, die einen optimalen Kompromiß zwischen den sich widersprechenden Praxis-Anforderungen darstellen.

Zur Granulierung von Ruß N550 (nach ASTM) nach dem erfindungsgemäßen Verfahren wurde er mit Wasser auf einen Feuchtegehalt von 43 % angefeuchtet (entsprechend 754 g Wasser auf 1 kg Ruß) und in einem Mischer gründlich vermischt.

Die Zugabe von Wasser ist notwendig, um einerseits die erforderlichen Preßkräfte zu reduzieren und um andererseits die Haftkräfte zwischen den Partikeln zu aktivieren.

Die erforderliche Mischzeit beträgt im Mittel ca. 4 Minuten. Aufgrund der schnellaufenden Mischwerkzeuge findet eine intensive Mischung ohne Agglomeratbildung statt.

Der angefeuchtete Ruß wurde anschließend mit einer Ringmatrizenpresse bei einer Drehzahl der Ringmatrize von 630 min$^{-1}$ und einem spezifischen Mengendurchsatz von 5,5 kg $\cdot$ s$^{-1}$ $\cdot$ m$^{-2}$. (Der spezifische Mengendurchsatz ist hier gleich der Masse des verpreßten Pulvermaterials pro Kanalfläche und Zeiteinheit) verpreßt. Die Agglomeratstränge von etwa 1 bis 10 mm Länge wurden dann in einem Rundungsaggregat mit Riffelscheibe bei einer Drehzahl von 900 min$^{-1}$ für die Dauer von 10 Minuten verrundet.

Nach Trocknung der Ruß-Granulate bei 150 bis 250° C bis auf eine Restfeuchte von weniger als 1 % wurden sie anwendungstechnischen Prüfungen unterworfen. 93 % der so erhaltenen Granalien hatten einen Durchmesser zwischen 0,7 und 1,4 mm. Die weiteren anwendungstechnischen Eigenschaften sind aus Tabelle 1 zu entnehmen.

Vergleichsbeispiel 1a und 1b

Zum Vergleich mit den Rußgranulaten nach dem erfindungsgemäßen Verfahren wurde der Ruß N550 in Pulverform mit zwei weiteren zum Stand der Technik gehörenden Verfahren granuliert. Es handelte sich dabei um die Granulation in einem Mischer mit Stachelwelle und in einem Pflugscharmischer. Die Ergebnisse dieser Granulationsversuche sind in Tabelle 1 mit denen nach Beispiel 1 verglichen.

Wie Tabelle 1 zeigt, liefert das erfindungsgemäße Verfahren Kugeln mit einer sehr engen Korngrößenverteilung.

Der Abrieb liegt innerhalb der Spezifikation und wird nur vom Vergleichsbeispiel 1a unterboten, bei dem der Ruß N550 mit 1 % Ligninsulfonat als Bindemittel granuliert wurde. Vergleichsbeispiel 1b ohne Bindemittel weist einen unzulässig hohen Abrieb auf. Die Dispergierhärte der erfindungsgemäßen Rußkugeln ist aufgrund der engen Kornverteilung und Homogenität sehr gering.

Bei den Vergleichsbeispielen mußte ein höherer Wassergehalt eingesetzt werden, um zufriedenstellende Granulationsergebnisse zu erhalten. Dies hat beim nachfolgenden Trocknungsvorgang einen höheren Energieverbrauch als beim erfindungsgemäßen Verfahren zur Folge.

Tabelle 1

| Vergleich verschiedener Rußagglomerationsverfahren | | | |
|---|---|---|---|
| | Beispiel 1 | Vergleichsbeispiel 1a | Vergleichsbeispiel 1b |
| Verfahr. | nach Erfindung | Stachelwelle | Pflugschar |
| Feuchte | 43 % | 45 % | 52 % |
| Bindemittel | -- | 1 % Ligninsulf. | -- |
| Kornspektrum | 93 % zwischen 0,7 - 1,4 mm | 47 % zwischen 0,7 - 1,4 mm | 75 % zwischen 0,7 - 1,4 mm |
| Abrieb | 0,6 % | 0,4 % | 3,6 % |

Beispiel 2:

In einer zweiten Versuchsserie wurden die Ruße N550, N660 und ein Leitfähigkeitsruß (Printex XE2 von Degussa) granuliert. Für diese Versuchsserie wurde eine Matrize mit Preßkanaldurchmessern von 1,4 mm und Preßkanallängen von 3,6 mm gewählt. Der Walzenspalt betrug wie bei Beispiel 1 0,2 mm.

Die Ruße N550 und N660 wurden jeweils nach dem erfindungsgemäßen Verfahren und nach den zwei konventionellen Verfahren mit einer Stachelwelle und mit einem Pflugscharmischer granuliert und die damit erhaltenen Granulate bezüglich Einzelperlhärte, Abrieb, Farbstärke und Dispergierhärte miteinander verglichen.

Der Leitfähigkeitsruß konnte nur nach dem erfindungsgemäßen Verfahren granuliert werden. Granulierversuche mit Stachelwelle und Pflugscharmischer lieferten keine brauchbaren Granulate.

Bei den konventionellen Granulationsverfahren mit Stachelwelle und Pflugscharmischer wurden jeweils 1 Gew.-% Ligninsulfat als Bindemittel zugegeben. Beim erfindungsgemäßen Verfahren wurde ohne Bindemittelzusatz gearbeitet. Die Ergebnisse dieser Messungen sind in Tabelle 2 aufgeführt.

Tabelle 2

| Vergleich von Einzelperlhärte, Abrieb, Farbstärke und Dispergierhärte von Rußgranulaten aus den Rußen N550, N660 und einem Leitfähigkeitsruß, die nach 3 verschiedenen Verfahren granuliert wurden. | | | |
|---|---|---|---|
| | N550 | N660 | Leitfähigkeitsruß |
| Einzelperlhärte [cN] (nach DIN 53603) | | | |
| nach Erfindung | 20 | 11 | 23 |
| mit Stachelwelle | 30 | 45 | - |
| mit Pflugschar | 30 | 45 | - |
| Abrieb [%] (nach DIN 53583) | | | |
| nach Erfindung | 1,5 | 0,8 | 0,2 |
| mit Stachelwelle | 1,9 | 1,9 | - |
| mit Pflugschar | 2,2 | 2 | - |
| Farbstärke kalt [%] (nach DIN 53775) | | | |
| nach Erfindung | 100 | 115 | 96 |
| mit Stachelwelle | 100 | 100 | - |
| mit Pflugschar | 95 | 90 | - |
| Dispergierhärte [%] (nach DIN 53775) | | | |
| Pulver | - | - | 26 |
| nach Erfindung | 2 | 3 | 23 |
| mit Stachelwelle | 3,5 | 12 | - |
| mit Pflugschar | 1,0 | 15 | - |

Wie diese Tabelle zeigt, liefert das erfindungsgemäße Verfahren Rußgranulate, die zwar wegen des fehlenden Bindemittels eine geringere - jedoch immer noch ausreichende - Einzelperlhärte als konventionell mit Bindemittel granulierte Ruße aufweisen, die aber bezüglich Abrieb und Dispergierhärte den konventionellen Granulaten überlegen sind.

Die nach DIN 53775 bestimmte Farbstärke, (kalt) wurde bei Walzentemperaturen von 75° C gemessen. Die in Tabelle 2 angegebenen Werte sind Relativwerte, bezogen auf die Farbstärke, die mit dem mit der Stachelwelle granulierten Granulat erhalten wurden, multipliziert mit 100. Im Falle des Leitfähigkeitsrußes wurde als Bezugsgröße die Farbstärke gewählt, die mit dem Leitfähigkeitsruß in Pulverform erhalten wurde.

Es ist überraschend, daß die erfindungsgemäß granulierten Ruße einen geringeren Abrieb aufweisen als die konventionell granulierten Ruße, obwohl beim erfindungsgemäßen Verfahren auf die Zugabe eines Bindemittels verzichtet wurde. Dieser Befund ist wahrscheinlich durch die gute Kugelform und einheitliche Verdichtung dieser Granulate zu erklären, die trotz geringerer Einzelperlhärte zu einem geringeren Abrieb führt.

Das Granulat des Leitfähigkeitsrußes wurde auch bezüglich seiner Korngrößenverteilung untersucht. Die entsprechende Summenverteilungskurve ist in Figur 1 dargestellt.

Aus den Kornverteilungskurven von Figur 1 wurden für die vier in den Beispielen 1 und 2 sowie in den Vergleichsbeispielen 1a und 1b hergestellten Granulate jeweils der mittlere Korndurchmesser sowie das 80 %-Durchmesserintervall bestimmt, welches 80 Gew.-% der jeweiligen Granalien umfaßt. Die Ergebnisse sind in Tabelle 3 aufgeführt. Das 80 %-Intervall wurde aus den Durchmessern der Verteilungskurven für die Summenwerte von 10 und 90 % ermittelt. Es ist in Tabelle 3 in Prozent des mittleren Korndurchmessers angegeben. Man erkennt aus dieser Tabelle, daß die erfindungsgemäß hergestellten Granulate eine deutlich engere Korngrößenverteilung aufweisen als die Vergleichsgranulate. Insbesondere besitzen die erfindungsgemäßen Granulate einen wesentlich geringeren Feinanteil. Bei dem Granulat des Leitfähigkeitsrußes nach Beispiel 2 ist der Einfluß des größeren Preßkanal-Durchmessers auf den sich ergebenden mittleren Korndurchmesser zu erkennen.

Tabelle 3

|  | mittlerer Korndurchmesser [mm] | 80%-Durchmesserintervall in Prozent des mittleren Durchmessers |
|---|---|---|
| Beispiel 1 |  |  |
| Ruß N550 nach Erfindung | 1,14 | 43 % |
| V-Beispiel 1a |  |  |
| Ruß N550 mit Stachelwelle | 1,16 | 150 % |
| V-Beispiel 1b |  |  |
| Ruß N550 mit Pflugschar | 1,12 | 84 % |
| Beispiel 2 |  |  |
| Leitfähigkeitsruß nach Erfindung | 1,37 | 59 % |

Beispiel 3: Granulation eines Waschmittelcompounds

Das zur Granulation kommende Waschmittelcompound bestand aus Natrium-Aluminium-Silikat und 7 % Polyacrylat als Bindemittel.

Eine vollständige Wassersättigung dieses Waschmittel-compounds lag bei einem Feuchtegehalt von 30 % vor. Zur Verpressung mit der Ringmatrizenpresse wurde es auf 25 % mit Wasser angefeuchtet, entsprechend einem Wassersättigungsgrad von 0,83. Die Ringmatrizenpresse wurde für diese Versuche mit einer Drehzahl von 200 $min^{-1}$ sowie einem spezifischen Durchsatz von 10 kg $\cdot$ s$^{-1}$ $\cdot$ m$^{-2}$ betrieben. Die Drehzahl des Rundungsaggregats betrug 600 $min^{-1}$.

Die verrundeten Agglomerate wurden bei einer Temperatur von 150° C bis auf eine Restfeuchte von 1 % getrocknet und anschließend bezüglich Schüttgewicht, Fließfähigkeit, Redispergierbarkeit und Korngrößenverteilung charakterisiert.

Die Fließfähigkeit des granulierten Waschmittelcompounds wurde mit Hilfe des Hosokawa-Pulvertesters bestimmt. Dabei wird aus vier verschiedenen Meßwerten (Böschungswinkel, Kompressibilität, Spachtelwinkel, Uniformitätskoeffizient) ein Fließfähigkeitsindex ermittelt, der zwischen 0 und 100 liegen kann.

Zur Charakterisierung der Redispergierbarkeit wurde der Gewichtsanteil des nicht dispergierten Materials mit Teilchendurchmessern größer als 56 μm ermittelt.

Das Granulat besaß ein Schuttgewicht von 764 g/l und zeichnete sich nach Hosokawa durch eine "sehr gute" Fließfähigkeit aus (Fließfähigkeitsindex 100). Der mittlere Durchmesser der Granulen betrug 1 mm. Etwa 80 % der Granulen lagen mit ihrem Durchmesser in dem Intervall zwischen 0,85 und 1,15 mm. Das Granulat besaß keinerlei Kornanteile unter 100 μm Durchmesser. Der Anteil mit Durchmessern unter 250 μm betrug nur 1,3 %. Das erfindungsgemäß hergestellte Granulat war also absolut staubfrei. Die Redispergierversuche ergaben einen Anteil von nicht dispergiertem Waschmittel mit Durchmessern größer als 56 μm von unter 5 %.

Vergleichsbeispiel 3:

Das Waschmittelcompound nach Beispiel 3 wurde mit Hilfe eines Standard-Sprühagglomerationsverfahren granuliert und wie in Beispiel 3 charakterisiert.

Das Sprüh-Granulat besaß ein Schüttgewicht von 600 g/l. Seine Fließfähigkeit war mit einem Fließfähigkeitsindex von unter 90 schlechter als die des erfindungsgemäß hergestellten Granulats. Dieser Wert gilt aber nach Hosokawa noch als "ziemlich gut". 7 % des Sprüh-Granulats besaßen Kornanteile unter 100 μm Durchmesser.

Es war somit erheblich mit Staub belastet. Die Redispergierversuche ergaben einen Anteil von nicht dispergiertem Waschmittel mit Durchmessern größer als 56 μm von etwa 27 %.

Diese Ergebnisse belegen somit die hervorragenden Eigenschaften des nach dem erfindungsgemäßen Verfahren granulierten Waschmittelcompounds gegenüber dem Sprüh-Granulatranulat.

Für den Gebrauchswert des Waschmittels ist hierbei das gute Fließverhalten sowie die gute Dispergierbarkeit und der geringe Staubanteil (Teilchen mit Korndurchmessern kleiner als 100 µm) von entscheidender Bedeutung.

Beispiel 4: Granulation von pyrogener Kieselsäure

Es wurde pyrogene Kieselsäure nach dem erfindungsgemäßen Verfahren zu Kugeln verformt. Zum Einsatz kam pyrogene Kieselsäure mit einer spezifischen Oberfläche nach BET (DIN 66 132) von 300 $m^2$/g (AEROSIL 300 der Degussa AG). Als Bindemittel, Gleitmittel und Plastifizierer wurden entsprechend den Rezepturen in der DE 39 12 504 Magnesiumstearat, Methylzellulose und Harnstoff verwendet.

Eine Mischung aus 62,5 % pyrogener Kieselsäure, 5,8 % Magnesiumstearat, 9,6 % Methylzellulose und 22,1 % Harnstoff wurde mit Wasser auf einen Feuchtegehalt von 60 %, entsprechend einem Wassersättigungsgrad von 80 %, angefeuchtet und mit der Ringmatrizenpresse zu Agglomератsträngen von 10 bis 30 mm Länge verpreßt, die anschließend im Rundungsaggregat verrundet wurden.

In Abweichung zu den Betriebsparametern in den vorangegangenen Beispielen wurde die Ringmatrizenpresse mit Drehzahlen von 200 min$^{-1}$ und das Rundungsaggregat bei abgestuften Drehzahlen von 400 und 600 min$^{-1}$ betrieben. Das so erhaltenen Granulat wurde bei 100° C getrocknet und anschließend eine Stunde bei 850° C getempert. Das getemperte Granulat bestand zu 99,4 % aus $SiO_2$.

Das Schüttgewicht des fertigen Granulats betrug 450 g/l. 80 % der Granulen hatten einen Kugeldurchmesser zwischen 1,4 und 2,5 mm. Der Abrieb des Granulats wurde mit dem Friabilator der Firma Erweka bestimmt und betrug nur 0,2 %. Zur Ermittlung der Bruchhärte wurden Fallversuche in einem Fallrohr von 3 m Höhe vorgenommen. Getestet wurden 50 g des Kieselsäuregranulats. Es konnte keinerlei Bruch der Granulen festgestellt werden.

Die Ergebnisse sind noch einmal in Tabelle 4 zusammengestellt und werden dort mit denen von Vergleichsbeispiel 4 verglichen.

Vergleichsbeispiel 4:

Im Vergleich zu Beispiel 4 wurde dieselbe Rezeptur mit Hilfe eines LUK 2,5 Extruders extrudiert.

Die Mischung aus Kieselsäure und den genannten Zuschlagstoffen mußte allerdings auf 66 % angefeuchtet werden. Mit einer geringeren Feuchte war eine Extrusion nicht möglich.

Der erhöhte Feuchtegehalt machte eine Verrundung der Extrudate mit dem Rundungsaggregat unmöglich. Deshalb wurden die Extrudate ohne weitere Verrundung kalziniert und getempert wie in Beispiel 3 und bezüglich Abrieb und Bruch bei Fallversuch mit dem Granulat von Beispiel 4 verglichen. Wegen der zylindrischen Form der Extrudate weisen sie einen größeren Abrieb und eine erhöhte Bruchgefahr auf als die kugelförmigen Granulen.

Tabelle 4

| Granulation von pyrogener Kieselsäure | | |
|---|---|---|
| | Beispiel 3 | Vergleichsbeispiel 3 |
| Verfahren | nach Erfindung | Kneten + Extrudieren |
| Feuchte | 60 % | 66 % |
| Kornspektrum | 80 % zwischen 1,4 und 2,5 mm | keine Verrundung möglich |
| Abrieb | 0,2 % | 2 % |
| Bruch bei Fallversuch | 0 % | 2 % |

Mit der Herstellung von kugelförmigen Granulen aus pyrogener Kieselsäure nach Beispiel 4 ist es erstmalig gelungen, pyrogene Kieselsäure zu Kugeln zu verformen, die besonders vorteilhaft als Katalysatorträger eingesetzt werden können. Gegenüber den zu Extrudaten oder Tabletten verformten pyrogenen Kieselsäuren weisen sie einen geringeren Abrieb und eine verringerte Bruchgefahr bei der Handhabung auf.

**Patentansprüche**

1. Verfahren zur Herstellung kugelförmiger Granulate aus pulverförmigen Feststoffen, wobei die Feststoffe durch Zugabe eines Befeuchtungsmittels und gegebenenfalls eines Bindemittels sowie weiterer Additive, in einem Mischer unter Vermischen gleichmäßig durchfeuchtet und anschließend die durchfeuchtete Mischung mit einer Ringmatrizenpresse, die einen variablen Schlupf zwischen Ringmatrize und Preßwalze aufweist, zu zylinderförmigen Strängen verpreßt, und danach die Stränge in einem Rundungsaggregat mit Riffelscheibe zu kugelförmigen Granulaten gerundet werden,
**dadurch gekennzeichnet**,
daß man eine Ringmatrizenpresse einsetzt, die Preßkanäle mit einem Längen- zu Durchmesserverhältnis von 1 : 1 bis 10 : 1 und einen Walzenspalt zwischen Ringmatrize und Preßwalze von 0,05 bis 2 mm aufweist.

## Claims

1. Process for the production of spherical granulates from pulverulent solids, wherein the solids are uniformly thoroughly moistened while being mixed in a mixer by addition of a moistening agent and optionally a binder and further additives and the thoroughly moistened mixture is subsequently pressed with an annular die press having variable slippage between the annular die and press roller to yield cylindrical strands and the strands are then rounded in a rounding unit having a ribbed place to yield spherical granulates,
characterised in that
an annular die press is used which has press channels having a length to diameter ratio of 1:1 to 10:1 and a nip between the annular die and press roller of 0.05 to 2 mm.

## Revendications

1. Procédé de fabrication de granulés sphériques à partir de solides pulvérulents, dans lequel on humidifie de manière approfondie les solides par addition d'un agent humidifiant et le cas échéant d'un liant ainsi que d'autres additifs, dans un mélangeur, tout en mélangeant régulièrement, puis on presse le mélange bien humidifié avec une presse à matrice annulaire qui présente un recul variable entre la matrice annulaire et le cylindre compacteur, pour obtenir des joncs cylindriques, et ensuite on arrondit les joncs dans un appareil d'arrondissement avec un disque cannelée pour obtenir des granulés sphériques,
Caractérisé en ce qu'
on utilise une presse à matrice annulaire qui présente des canaux de pressage ayant un rapport longueur-diamètre de 1:1 à 10 et un intervalle de laminage entre la matrice annulaire et le cylindre compacteur de 0,05 à 2 mm.

Figur 1:

a) Ruß N550: erfindungsgemäß granuliert (Beispiel 1)

b) Ruß N550: mit Stachelwelle granuliert (Vergleichsbeispiel 1a)

c) Ruß N550: mit Pflugschar granuliert (Vergleichsbeispiel 1b)

d) Leitfähigkeitsruß: erfindungsgemäß granuliert (Beispiel 2)